**Europäisches Patentamt**

**European Patent Office**

**Office européen des brevets**

(11) Veröffentlichungsnummer: **0 252 394**
**B1**

(12) **EUROPÄISCHE PATENTSCHRIFT**

(45) Veröffentlichungstag der Patentschrift:
**20.09.89**

(21) Anmeldenummer: **87109296.1**

(22) Anmeldetag: **27.06.87**

(51) Int. Cl.⁴: **A23F 5/48**, A23L 1/221,
B01D 11/02, B01D 11/04

(54) Verfahren zum Trocknen von pflanzlichen oder tierischen Materialien.

(30) Priorität: **08.07.86 DE 3622847**
**16.02.87 DE 3704773**

(43) Veröffentlichungstag der Anmeldung:
**13.01.88 Patentblatt 88/2**

(45) Bekanntmachung des Hinweises auf die Patenterteilung:
**20.09.89 Patentblatt 89/38**

(84) Benannte Vertragsstaaten:
**AT BE CH DE ES FR GB GR IT LI LU NL SE**

(56) Entgegenhaltungen:
**CH-A- 253 701**
**CH-A- 525 621**
**CH-A- 563 792**
**GB-A- 1 106 468**

(73) Patentinhaber: **KOHLENSÄUREWERK DEUTSCHLAND GMBH, Melkenweg 1, D-5462 Bad Hönningen(DE)**

(72) Erfinder: **Sylla, Klaus, Dr.-rer.nat.Dipl.-Chem., Ohmstrasse 5, D-2800 Bremen 33(DE)**

(74) Vertreter: **Lauer, Dieter, Dr., c/o Kali-Chemie AG Postfach 220 Hans-Böckler-Allee 20, D-3000 Hannover 1(DE)**

**Beschreibung**

Die Erfindung betrifft ein Verfahren zum Trocknen von pflanzlichen oder tierischen Materialien durch Kontaktieren des Materials mit einem Gasstrom, der bevorzugt im Kreislauf geführt wird und der das abzutrennende Wasser abführt.

Methoden zum Haltbarmachen von tierischen und pflanzlichen Materialien durch Feuchtigkeitsentzug sind bekannt. Ein klassischer Vertreter des eingangs genannten Verfahrens ist die Heißlufttrocknung.

Viele empfindliche pflanzliche und tierische Materialien werden jedoch bei den konventionellen Trocknungsmethoden empfindlich geschädigt, thermisch und oxidativ angegriffen und denaturiert. Bei den üblichen Trocknungsverfahren sind unter dem Einfluß von hohen Temperaturen, Sauerstoff und Wasserdampf eine Reihe von unerwünschten Nebenreaktionen unvermeidbar. So tritt bei vielen Lebensmitteln "Kochgeschmack" auf, es gibt Schädigungen der Zellstruktur, enzymatische und oxidative Abbaureaktionen, Aromen werden abgebaut oder reagieren mit anderen Stoffen, Ester werden verseift.

Viele Materialien wie etwa Frischobst, Frischgemüse oder auch das Fleisch von Schalentieren lassen sich daher gegenwärtig weder durch Heißlufttrocknung, noch durch Gefriertrocknung im Vakuum ohne Qualitätseinbußen trocknen.

Es hat bis in die neueste Zeit nicht an Versuchen gefehlt, hier Abhilfe zu schaffen.

So ist aus der US-Patentschrift 4 251 923 ein Verfahren bekannt, bei dem Nahrungsmittel wie z.B. Gemüse, Früchte, Getreide oder Fleisch einer Kombination aus Vakuumtrocknung und Trocknung mit einem trockenen Gasstrom unterworfen werden. Der im Kreislauf geführte Gasstrom, beispielsweise Stickstoff oder Kohlendioxid, wird über eine Adsorptionsschicht geleitet, die den Wasserdampfgehalt bindet und gleichzeitig aus dem Material entweichende Aromastoffe festhält; diese können dann als Flüssigkeit wieder freigesetzt und rückgeführt werden.

Die Temperatur des Gasstroms soll dabei zwischen 10°C und 50°C gehalten werden. Der Druck liegt normalerweise bei Atmosphärendruck. Das Gas kann aber auch bei erniedrigtem oder erhöhtem Druck benutzt werden. Entscheidend für den Erfolg des dort beschriebenen Verfahrens ist jedoch die Kombination der Vakuumtrocknung mit der Trocknung mit einem Gasstrom, wobei diese beiden Maßnahmen alternierend oder gleichzeitig angewendet werden und während der Phase der Vakuumtrocknung darauf zu achten ist, daß das Material nicht gefriert.

Aus der PCT-Anmeldung WO 86/01686 ist ein Vorschlag bekannt, Pflanzenprodukte dadurch zu trocknen, daß sie in herkömmlicher Weise mit warmer Luft auf einen verringerten Wassergehalt getrocknet und nachfolgend in einer im wesentlichen sauerstofffreien Atmosphäre gelagert werden. Da bei empfindlicheren Materialien der Qualitätsverlust schon beim Trocknen mit erwärmter Luft eintritt, kann dieses Verfahren für sauerstoffempfindliche Materialien nicht eingesetzt werden.

Aus dem US-Patent 3 511 671 ist ein Verfahren zur Entwässerung von Nahrungsmitteln bekannt, welches eine Vakuum- oder Heißlufttrocknung mit einer Behandlung des Materials mit Distickstoffmonoxid kombiniert. Das Distickstoffmonoxid wird bei einem Druck zwischen etwa 1,5 und 2,4 bar eingesetzt und kann im Gemisch mit Stickstoff oder anderen inerten Gasen angewendet werden. Allerdings verlängert sich im Fall der Benutzung eines Gemisches von Distickstoffmonoxid mit anderen Gasen die Behandlungszeit. Der Erfolg des Verfahrens wird auf eine besondere, eine Verbindung mit dem Nahrungsmittel eingehende Wirkung des Distickstoffmonoxids zurückgeführt.

Aufgabe der Erfindung ist es nun, ein Verfahren zur Abtrennung von Wasser aus tierischen und pflanzlichen Materialien der eingangs genannten Art anzugeben, das eine einfache und unaufwendige Trocknung von empfindlichem Material ohne Qualitätseinbußen gestattet.

Die Lösung dieser Aufgabe gelingt erfindungsgemäß dadurch, daß als Gas Kohlendioxid oder ein Kohlendioxid-Stickstoff-Gemisch bei einer Temperatur zwischen 30 und 80°C und einem Druck größer 1 bis 30 bar eingesetzt wird.

Das verwendete Kohlendioxid oder Kohlendioxid-Stickstoff-Gemisch unterbindet bzw. vermindert chemische, enzymatische oder andere unerwünschte Reaktionen im Material bei der Behandlung. Im Fall des Kohlendioxid-Stickstoff-Gemisches ist der Anteil an Stickstoff nicht größer als 80%, vorzugsweise nicht größer als 50% und besonders bevorzugt etwa 20%. Bevorzugt wird Kohlendioxid verwendet.

Die gewünschte Prozeßtemperatur wird durch Heizen des Gases oder durch Strahlungs- oder Konvektionswärme erhalten. Der Gasdruck wird in dem zumeist geschlossenen System durch den Druck des zugeführten Gases oder Gasgemisches geregelt.

Die Behandlungstemperatur liegt für weniger empfindliche Stoffe im Bereich von 30 bis 80°C, für die meisten empfindlichen Stoffe sollte jedoch die Temperatur zwischen 30 und 50°C liegen. Hier ist je nach Anwendungsgebiet des Verfahrens ein Kompromiß zwischen Schonung des Materials und Geschwindigkeit des Trocknungsvorgangs zu wählen. Es kann sich empfehlen, die Prozeßtemperatur während der Abtrennung des Wassers zu ändern. Dabei kann es vorteilhaft sein, anfangs bei höherer Temperatur zu arbeiten, um schnell möglichst viel Wasser abzutrennen und erst anschließend die Restfeuchte möglichst schonend zu entfernen.

Den Prozeßdruck wird man vorzugsweise im oberen Bereich wählen, da bei höheren Drücken der Gasstrom pro Volumen eine größere Masse aller Komponenten, auch des Wasserdampfanteils, besitzt und damit Wärme- und Stofftransporte verstärkt werden. Aus Gründen der höheren Kosten für druckfeste Apparate ist ein Arbeiten bei mittleren Drücken zu empfehlen. Prozeßdrücke bis 16 bar, insbesondere 2 bis 10 bar, ganz besonders 2 bis 6 bar, sind bevorzugt.

Der Zeitraum, der zur weitgehenden Abtrennung des Wassers ausreicht, erstreckt sich über 1 bis 48 Stunden, insbesondere über 4 bis 24 Stunden.

Aus Kostengründen sollte man den Gasstrom im Kreislauf führen und das darin aufgenommene Wasser an geeigneter Stelle des Kreislaufs abscheiden. Hierzu eignen sich Kühlen und/oder Entspannen, letzteres vor allem, wenn bei höheren Drücken gearbeitet wird, da sich dabei das Gas an einer einfachen Düse abkühlt und vom kondensierten Wasser getrennt werden kann. Durch anschließendes Komprimieren wird es wieder erwärmt.

Zum Aufnehmen des Wassers aus dem Gaskreislauf eignen sich auch Adsorber.

Beim Führen des Gasstroms im Kreislauf kann es vorteilhaft sein, nur einen Teil des beladenen Gases der Abtrennbehandlung zu unterziehen. Dadurch wird die Geschwindigkeit am Gut erhöht und eine bessere Beladung des Gases mit dem Wasser erhalten.

Als Materialien können insbesondere eingesetzt werden Obst, Gemüse, Pilze, Beeren, Knollenfrüchte, Cerealien, Nüsse, Weintrauben, Kräuter und andere Pflanzen und deren Früchte, oder auch Fleisch und anderes Zellmaterial von Warmblütern, Fischen, Schalen- und Weichtieren Mikroorganismen und anderes Zellmaterial.

Bei diesen empfindlichen Materialien erweist sich dabei überraschenderweise, daß keine Qualitätsverminderung eintritt. Selbst bei erhöhter Temperatur, etwa bei 50°C, werden oxidative wie auch enzymatische Abbaureaktionen praktisch völlig unterbunden. Auch tritt trotz der bei diesen Temperaturen rasch voranschreitenden Trocknung erstaunlicherweise praktisch kein Qualitätsverlust durch Zellzerstörung ein. Die getrockneten Materialien lassen sich ohne Aromaverlust und Einbuße an natürlichem Geschmack ausgezeichnet lagern und anschließend wieder rehydratisieren. Ein Hartwerden der Außenschichten wird nicht beobachtet.

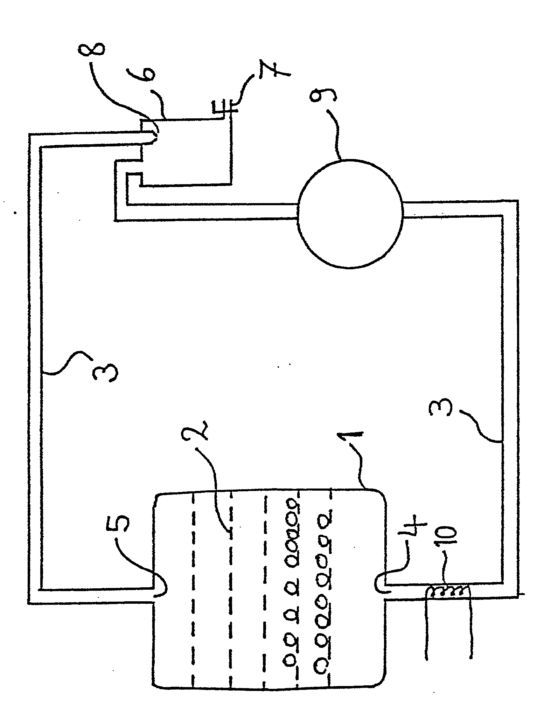

Im folgenden wird das erfindungsgemäße Verfahren anhand der Beschreibung der Funktionsweise einer zu seiner Durchführung geeigneten Vorrichtung näher erläutert. Dabei wird auf die beigefügte Zeichnung Bezug genommen, die schematisch diese Vorrichtung zeigt.

Die Vorrichtung weist einen Konditionierbehälter 1 auf, in dem Lochbleche 2 in Strömungsrichtung des Gasstromes hintereinander angeordnet sind. Im gezeigten Ausführungsbeispiel strömt das trockene Schutzgas an der Unterseite des Konditionierbehälters 1 ein und verläßt diesen wasserdampfbeladen an seiner Oberseite; die Lochbleche 2 liegen jeweils horizontal quer zur Strömungsrichtung des Schutzgases und folgen vertikal aufeinander in Strömungsrichtung.

Auf den Lochblechen 2 liegt, wie in der Zeichnung schematisch angedeutet, das zu trocknende Material, so daß der durch die Löcher der Lochbleche 2 durchtretende Schutzgasstrom es überstreicht.

Der Schutzgasstrom kommt trocken über eine Kreislaufleitung 3 und wird vor Eintritt in den Konditionierbehälter 1 durch eine Heizung 10 auf die gewünschte Konditionierungstemperatur gebracht. Nach seinem Eintritt in den Konditionierbehälter 1 durch einen Einlaß 4 führt er Wasserdampf von der Oberfläche des Materials ab und verläßt, mit dem Wasserdampf beladen, den Konditionierbehälter 1 durch einen Auslaß 5. Über die Kreislaufleitung 3 gelangt der wasserdampfbeladene Schutzgasstrom zu einem Wasserabscheider 6, indem er sich über eine Düse 8 entspannen kann. Durch die dabei auftretende Abkühlung kondensiert das Wasser an den Innenflächen des Wasserabscheiders 6 aus; ein Wasserablaßhahn 7 dient dazu, den Wasserabscheider 6 zu geeigneten Zeitpunkten zu entleeren.

Der so entspannte und von einem großen Teil des mitgeführten Wasserdampfes befreite Schutzgasstrom wird von einer Pumpe 9 aus dem Wasserabscheider 6 abgesaugt und komprimiert, wobei er sich erwärmt. Die Pumpe 9 drückt den Schutzgasstrom nachfolgend in den zum Konditionierbehälter 1 führenden Teil der Kreislaufleitung 3, so daß der Schutzgasstrom sich dort erneut mit Wasserdampf beladen kann.

Beispiele

In einem stehenden, zylindrischen Konditionierbehälter von 1 m Durchmesser und einer Höhe von 1,5 m, der in seinem Boden einen zentralen Gaseinlaß besitzt, befindet sich ein Lochblecheinsatz mit 5 übereinander angeordneten Lochblechen zur Aufnahme von stückigem Gut. Der Behälter wird nach dem Befüllen mit zu trocknendem Material durch einen Deckel druckfest verschlossen und mit Gas zunächst gespült und dann unter Druck gesetzt. Vom Deckel führt eine Gasleitung zu einer Düse, die in einen Entspannungsbehälter mündet, der es erlaubt, das durch die Entspannung abgekühlte Gemisch in Kondensat, welches abgelassen wird, und Gas zu trennen. Von dort führt die Gasleitung zu einem Kompressor, in dem es auf die Konditionierungstemperatur gebracht wird. Das trockene Gas gelangt nun über den schon erwähnten Bodeneinlaß des Konditionierbehälters zurück in den Kreislauf, es durchströmt das Gut und nimmt dabei dessen Feuchte auf.

In der beschriebenen Anordnung können 150 kg von kleingewürfeltem, gekochtem Schweinefleisch bei 70°C innerhalb von 6 h bei einem Druck von 8 bar und einer Kompressoransaugleistung von 500 l/min. in einem 1:1 Gemisch von Kohlendioxid und Stickstoff getrocknet werden.

Zum besonders schonenden Trocknen von 100 kg zerkleinerten frischen Paprikaschoten braucht man in Kohlendioxid bei 50°C und 4 bar ca. 24 Stunden.

Patentansprüche

1. Verfahren zum Trocknen von pflanzlichen oder tierischen Materialien durch Kontaktieren des Materials mit einem Gasstrom, der bevorzugt im Kreislauf geführt wird und der das abzutrennende Wasser abführt, dadurch gekennzeichnet, daß als Gas Kohlendioxid oder ein Kohlendioxid-Stickstoff-Gemisch bei einer Temperatur zwischen 30 und 80°C und einem Druck größer 1 bis 30 bar eingesetzt wird.

2. Verfahren nach Anspruch 1, dadurch gekennzeichnet, daß die Temperatur zwischen 30 und 50°C liegt.

3. Verfahren nach einem der Ansprüche 1 oder 2, dadurch gekennzeichnet, daß die Temperatur während der Abtrennung des Wassers geändert wird.

4. Verfahren nach einem der Ansprüche 1 bis 3, dadurch gekennzeichnet, daß der Druck bis 16 bar, vorzugsweise 2 bis 10 bar, insbesondere 2 bis 6 bar, beträgt.

5. Verfahren nach Anspruch 1, dadurch gekennzeichnet, daß das Gas durch einen Kondensator und/oder Adsorber geführt wird.

6. Verfahren nach Anspruch 5, dadurch gekennzeichnet, daß der Gasstrom im Kondensator und/oder Adsorber gekühlt bzw. entspannt wird.

7. Verfahren nach einem der Ansprüche 1 bis 6, dadurch gekennzeichnet, daß das Material beim Kontaktieren mit dem Gas zusätzlich erwärmt wird.

8. Verfahren nach einem der vorhergehenden Ansprüche, dadurch gekennzeichnet, daß das Material 1 bis 48 Stunden, vorzugsweise 4 bis 24 Stunden, vom Gas durchströmt wird.

## Claims

1. A process for drying plant or animal material by bringing the material into contact with a gas stream which is preferably circulated and which removes the water which is to be separated off, characterised in that carbon dioxide or a carbon dioxide/nitrogen mixture is used as a gas at a temperature of between 30 and 80°C and at a pressure of greater than 1 to 30 bar.

2. A process according to Claim 1, characterised in that the temperature is between 30 and 50°C.

3. A process according to one of Claims 1 or 2, characterised in that the temperature is altered during the separation of the water.

4. A process according to one of Claims 1 to 3, characterised in that the pressure is up to 16 bar, preferably 2 to 10 bar, in particular 2 to 6 bar.

5. A process according to Claim 1, characterised in that the gas is passed through a condenser and/or adsorber.

6. A process according to Claim 5, characterised in that the gas stream is cooled or undergoes pressure relief in the condenser and/or adsorber.

7. A process according to one of Claims 1 to 6, characterised in that the material is additionally heated upon bringing into contact with the gas.

8. A process according to one of the preceding Claims, characterised in that the gas flows through the material for 1 to 48 hours, preferably 4 to 24 hours.

## Revendications

1. Procédé de séchage de substances végétales ou animales, par mise en contact de la substance avec un courant gazeux, lequel s'écoule de préférence en circuit fermé et évacue l'eau à séparer, caractérisé en ce qu'on utilise comme gaz de l'anhydride carbonique ou un mélange d'anhydride carbonique et d'azote à une température comprise entre 30 et 80°C et sous une pression supérieure à 1 et jusqu'à 30 bar.

2. Procédé selon la revendication 1, caractérisé en ce que la température est comprise entre 30 et 50°C.

3. Procédé selon l'une des revendications 1 ou 2, caractérisé en ce que la température est modifiée pendant la séparation de l'eau.

4. Procédé selon l'une des revendications 1 à 3, caractérisé en ce que la pression est inférieure ou égale à 16 bar, de préférence comprise de 2 à 10 bar, en particulier de 2 à 6 bar.

5. Procédé selon la revendication 1, caractérisé en ce que le gaz est envoyé à travers un condenseur et/ou un adsorbeur.

6. Procédé selon la revendication 5, caractérisé en ce que le courant gazeux est refroidi ou détendu dans le condenseur et/ou l'adsorbeur.

7. Procédé selon l'une des revendications 1 à 6, caractérisé en ce que la substance est en outre chauffée lors de sa mise en contact avec le gaz.

8. Procédé selon l'une des revendications précédentes, caractérisé en ce que la substance est traversée par le gaz pendant 1 à 48 heures, de préférence pendant 4 à 24 heures.